# FASCICULE DE BREVET EUROPEEN

(11) **EP 0 368 728 B1**
(45) Date de publication et mention de la délivrance du brevet: **03.02.1993**
(21) Numéro de dépôt: 89403025.3
(22) Date de dépôt: 03.11.1989
(51) Int. Cl.: C03C 27/04, F16B 11/00

(54) **Association par collage d'une pièce métallique et d'un vitrage**
Klebeverbindung einer Glasscheibe mit einem Metallgegenstand
Sticking joint between plate glass and a metallic article

(30) Priorité: 07.11.1988 DE 3837701
(43) Date de publication de la demande: 16.05.1990
(73) Titulaire: SAINT GOBAIN VITRAGE INTERNATIONAL, 92400 Courbevoie (FR); VEGLA Vereinigte Glaswerke GmbH, D-52066 Aachen (DE)
(72) Inventeur: Kunert, Heinz, D-5000 Köln 41 (DE)
(74) Mandataire: Muller, René

(56) Documents cités:
- EP-A- 0 195 712
- FR-A- 1 210 562
- US-A- 3 779 794

## Description

L'invention concerne un vitrage équipé d'une pièce métallique qui lui est associée par collage à l'aide d'une colle visqueuse, en particulier un vitrage automobile.

Lorsque la liaison entre un vitrage et une pièce métallique doit être particulièrement solide, elle est en général fixée soit par vissage soit par serrage. Dans le cas de vissage le vitrage est équipé d'un ou de plusieurs trous et la pièce métallique destinée à être fixée sur le verre possède obligatoirement une contre-plaque ou au moins une tête de vis du côté opposé . Les systèmes par serrage sont utilisés lorsque la pièce métallique doit être fixée au bord du vitrage. Dans les deux cas, le système comporte du côté opposé à la pièce métallique des éléments qui sont plus ou moins en relief par rapport à la surface du verre. De tels éléments peuvent être gênants du point de vue esthétique ou technique. C'est ainsi par exemple que sur une automobile, de telles parties affleurant au-dessus de la surface du verre peuvent perturber sensiblement l'écoulement de l'air le long de la "peau" extérieure du véhicule.

Si l'on veut éviter de tels ressauts à la surface du verre qui sont inhérents à la conception des pièces métalliques serrées ou vissées, on doit se tourner vers la seule solution, le collage entre la pièce métallique et la surface du verre. Mais malheureusement les collages présentent en général une solidité moins grande que les fixations par serrage ou vissage.

L'invention se donne pour tâche d'accroître la solidité et la tenue dans le temps des collages entre une pièce métallique et le verre de manière que des pièces collées puissent être mises en oeuvre là où il existe de fortes exigences en ce qui concerne la solidité et la tenue.

Selon l'invention, dans la zone cachée par la colle, le vitrage est équipé d'au moins un trou ou une encoche qui permet un accrochage mécanique supplémentaire de la colle durcie dans le vitrage.

Dans une variante préférée de l'invention on a prévu dans la zone du vitrage cachée par la colle de percer plusieurs trous traversants ou des fentes étroites.

Les moyens de l'invention ont un effet double : d'une part, les surfaces de verre en contact avec la colle sont accrues ce qui augmente l'adhérence, d'autre part en plus de l'augmentation de l'adhérence grâce à l'accroissement de la surface de collage, le système permet un accrochage positif, purement mécanique grâce à l'introduction de la masse de colle dans les logements du vitrage. Cette double action améliore la qualité mécanique de la liaison entre le verre et la pièce métallique à un point tel que l'on peut utiliser de telles liaisons par collage là où les collages habituels n'auraient pas fourni une tenue suffisante.

De manière avantageuse, on a prévu dans les parties du vitrage cachée par la colle d'effectuer plusieurs trous ou encoches ou fentes de dimensions relativement faibles. Le diamètre des trous ou la largeur des fentes doivent dans tous les cas être sensiblement plus petits que l'épaisseur du verre et être de l'ordre de 1 à 5 mm. Si l'on souhaite que la surface de collage gagnée grâce au système de l'invention - c'est, dans le cas d'un trou circulaire, la surface latérale du cylindre créé - soit supérieure à la surface de collage perdue, c'est-à-dire la surface du cercle du trou, alors, le diamètre du trou doit être au maximum égal à quatre fois l'épaisseur du vitrage. Le choix de diamètres de 1 à 5 mm permet de rester sensiblement en dessous de cette limite étant données les épaisseurs habituelles des vitrages concernés. On obtient ainsi en plus d'un ancrage mécanique un accroissement sensible de la surface de contact et donc de la force d'adhésion.

Pour réaliser les trous avec un diamètre petit ou des encoches en forme de fentes de faibles largeurs on utilise les procédés connus et les machines disponibles dans le commerce. Cependant, les outils de perçage mécanique sont peu adaptés contrairement à ceux fonctionnant à l'aide de jets d'eau à haute pression ou à l'aide d'un laser. Si l'on utilise une machine à jets d'eau haute pression on aura avantage à introduire dans le jet d'eau des grains de corindon. Le jet d'eau peut être installé par exemple sur un chariot à commande numérique qui se déplace au-dessus du vitrage selon un parcours programmé. On peut avec cette méthode produire un nombre déterminé de trous ou de fentes aux endroits voulus pratiquement avec des tolérances nulles et dans un temps relativement bref.

La forme, le diamètre, le nombre et la disposition des trous ou des fentes se déterminent en fonction des nécessités et peuvent varier de manière importante sans sortir du cadre de l'invention.

Il relève également de l'invention dans les cas où la pièce métallique est collée par une de ses surfaces sur une seule surface du vitrage que l'autre surface, du côté opposé en soit équipée d'une plaque métallique mince ou d'une pièce plate ou même d'un film de métal ou de plastique par collage de manière à cacher à la fois la masse de colle contenue dans les trous et la surface de collage de la pièce métallique visible au travers du verre. De telles protections peuvent rester très minces et ne provoquent ainsi pratiquement aucune surépaisseur de la surface du vitrage.

L'invention va être décrite plus précisément dans ses différentes formes et pour ses différentes applications à l'aide des dessins.

Parmi les figures, on voit successivement, en vue partielle :
figure 1 : une première forme de réalisation d'une liaison entre une glace latérale coulissante et un profilé de guidage débordant latéralement,
figure 2 : une deuxième manière de réaliser la liaison entre un profilé de guidage latéral et une glace coulissante,
figure 3 : la liaison entre la partie inférieure d'une glace latérale coulissante et un profilé en forme de U qui l'enchâsse,
figure 4 : la liaison entre une glace latérale coulissante et une pièce métallique en forme de bouton placée du côté interne du vitrage, au bord, pour la guider et,
figure 5 : la liaison entre un pare-brise fait de verre feuilleté et un élément métallique supportant le rétroviseur.

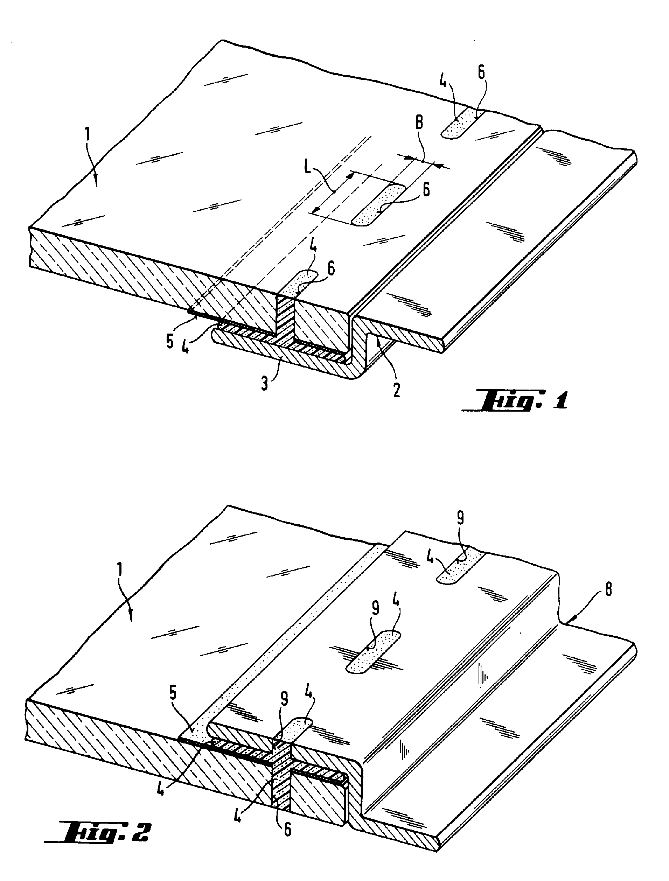

Les exemples présentés figure 1 concernent un vitrage 1 fait de glace trempée, il constitue la partie transparente coulissante d'une portière d'automobile. Le long de son bord vertical on l'a équipé d'un profilé métallique 2 en forme de Z. Ce profilé 2 coopère avec un guide placé dans le cadre de la fenêtre, celui-ci n'est pas représenté. La partie plate 3 du profilé 2 est collée à l'aide de la colle 4 sur le vitrage 1. De manière à protéger la colle 4 du rayonnement ultra-violet on a équipé le vitrage 1, au bord, d'une couche 5 constituée d'un émail céramique ou d'un autre matériau adapté.

Dans la zone du vitrage 1 protégé par la partie plate 3 du profilé 2 on a percé les trous 6 séparés de quelques millimètres ou de quelques centimètres. Dans l'exemple, les trous 6 se présentent sous forme de fentes allongées. Ils ont une largeur B de 1 à 5 mm et une longeur L de 5 à 20 mm. Les trous 6 en forme de fente ont été obtenus à l'aide d'un appareil de perçage à jet d'eau agissant avant la trempe.

La colle 4 est par exemple constituée d'un système unicomposant à base de polyuréthane qui polymérise à l'humidité de l'atmosphère. Ce mélange est du type habituel utilisé pour le collage des vitrages automobiles comme par exemple celui des brevets US 3 707 521 et 3 779 794. La composition de la colle a une consistance très visqueuse. Au cours du collage il faut s'assurer que la pression utilisée est suffisante pour permettre à la colle 4 de pénétrer dans les trous 6 et de les remplir.

La polymérisation de la colle 4 est favorisée par le fait que celle-ci possède des surfaces de contact avec l'atmosphère importantes grâce aux trous 6. Si c'est nécessaire on peut, après polymérisation, araser la masse polymérisée pour qu'elle ne déborde pas du niveau du verre.

La figure 2 présente un exemple de réalisation qui correspond pratiquement complètement à celui de la figure 1, elle se distingue uniquement par le fait que le profilé 8 est également équipé de trous 9 dont la forme, la taille et la disposition correspondent à ceux des trous 6 du vitrage 1. La colle 4 pénètre aussi bien dans les trous 6 que dans les trous 9 qu'elle remplit. On obtient de la sorte un accrochage mécanique particulièrement bon car on constitue avec ce procédé des sortes de "chevilles" constituées par la colle durcie. Elles améliorent la tenue de la liaison.

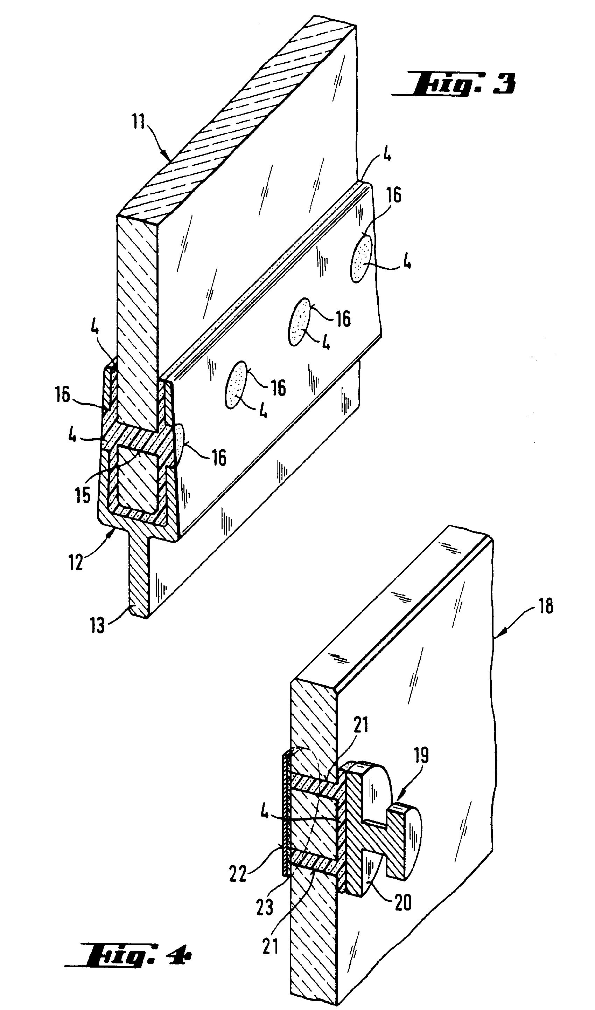

La forme de réalisation présentée figure 3 utilise également cet effet d'assemblage par chevilles ou par rivets. Dans ce cas, la glace latérale coulissante 11 est constituée de verre trempé thermiquement, elle comporte à son bord inférieur un profilé métallique 12 dont la fonction est de transmettre au vitrage les efforts dus au mécanisme servant à lever ou à descendre la glace. Le mécanisme agit sur l'aile 13 du profilé tandis que la partie haute 14 en forme de U enchâsse le bord du vitrage sur lequel il est collé par l'intermédiaire de la colle 4. Le vitrage 11 est équipé sur son bord inférieur de trous 15. Aux endroits de la section en U 14 du profilé correspondant aux trous 15 on a également prévu des trous 16 qui ont soit le même diamètre, soit de préférence un diamètre plus grand que les trous 15 du vitrage. La tenue au cisaillement de la liaison entre le profilé 12 et le vitrage 11 se trouve ainsi sensiblement accrue.

Un exemple supplémentaire d'utilisation du procédé est représenté figure 4. Il s'agit ici de nouveau d'un vitrage de portière coulissant 18 sur lequel est collé un bouton de guidage métallique 19. Le bouton 19 est placé du côté interne du vitrage et est guidé dans un profilé de guidage inclu dans le cadre de la fenêtre non représenté. Le bouton de guidage 19 est composé d'une embase 20 en contact avec la colle 4. Dans le vitrage 18, dans la zone cachée par l'embase 20 on a prévu un nombre de trous 21 qui ont avantageusement un diamètre compris entre 2 et 4 mm. C'est ainsi par exemple qu'on a pu placer de 4 à 8 trous dans une disposition géométrique quelconque. Sur le côté externe du vitrage 18 on a prévu, en face du bouton 19 une plaque métallique mince 22 circulaire dont le diamètre correspond à celui de l'assiette 20 du bouton 19. Cette plaquette 22 est elle-même liée au vitrage par l'intermédiaire d'une couche de colle 23.

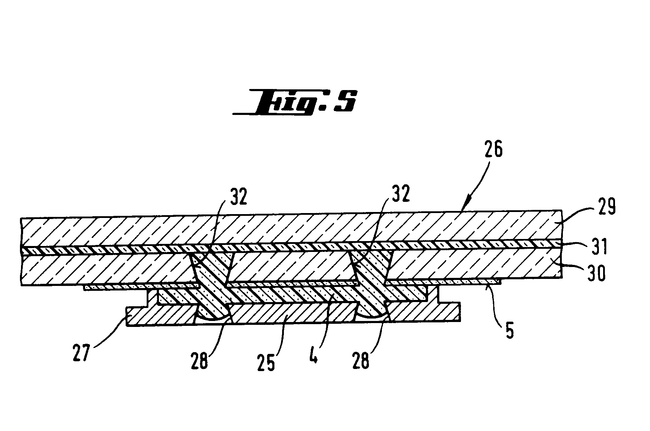

Sur la figure 5, on présente un exemple de réalisation supplémentaire où la liaison est celle d'un support de rétroviseur 25 avec la face interne d'un pare-brise feuilleté 6. L'élément support métallique 25 a la forme d'une plaque avec une partie débordante 27. L'élément métallique sert à accrocher le rétroviseur non représenté. La plaque 25 comporte des trous 28 qui seront au moins partiellement remplis par la colle 4. Le vitrage feuilleté 26 constitué de deux verres 29 et 30 associés par une couche intercalaire 31 comporte des trous 32 dans le verre interne 30. Ces trous sont situés dans la zone couverte par la colle 4. Celle-ci pénètre à l'intérieur des trous 32 lorsque la plaque 25 est pressée contre le vitrage. Les trous 32 peuvent présenter une dépouille, c'est-à-dire être de forme conique, ce qui accroît encore les performances de l'accrochage.

D'autres exemples de liaison selon l'invention sont constitués de supports collés sur des vitrages pour des éléments tels que des feux stop ou bien de pièces de quincaillerie destinées à fixer ou à rendre mobile le vitrage comme des charnières. En particulier, les vitrages de custode à entrebâillement possèdent des charnières et des verrous qui peuvent être, les uns comme les autres, fixés au verre par la technique de l'invention.

## Revendications

1. Vitrage comportant un élément métallique associé au vitrage à l'aide d'une colle visqueuse durcissable, caractérisé en ce que le vitrage (1 ; 11 ; 18 ; 30) est équipé dans la zone couverte par la colle 4 d'au moins un trou (6 ; 15 ; 21 ; 32) traversant le vitrage qui provoque un ancrage mécanique supplémentaire dans le vitrage de la colle (4) durcie.

2. Vitrage selon la revendication 1, caractérisé en ce que le diamètre ou la largeur des trous (6 ; 15 ; 21 ; 32) sont plus petits que l'épaisseur du vitrage (1 ; 11 ; 18 ; 30).

3. Vitrage selon la revendication 2, caractérisé en ce que le diamètre ou la largeur des trous (6 ; 15 ; 21 ; 32) sont compris entre 1 et 5 mm.

4. Vitrage selon l'une des revendications 1 à 3, caractérisé en ce que l'on utilise comme colle un polyuréthane unicomposant durcissant à l'humidité.

5. Vitrage selon l'une ou plusieurs des revendications 1 à 4, caractérisé en ce que l'élément métallique est un profilé de guidage (2 ; 8 ) collé le long du bord du vitrage (1) sur sa surface.

6. Vitrage selon l'une ou plusieurs des revendications 1 à 4, caractérisé en ce que l'élément métallique est constitué par un profilé (12) à section en U qui enchâsse le vitrage (11) au bord.

7. Vitrage selon l'une ou plusieurs des revendications 1 à 4, caractérisé en ce que l'élément métallique est un bouton de guidage (19) collé sur la surface interne d'un vitrage latéral coulissant (18).

8. Vitrage selon l'une ou plusieurs des revendications 1 à 4, caractérisé en ce que l'élément métallique est la pièce support (25) d'un rétroviseur.

9. Vitrage selon l'une ou plusieurs des revendications 1 à 4, caractérisé en ce que l'élément métallique est le support de signaux lumineux en particulier de feux stop.

10. Vitrage selon l'une ou plusieurs des revendications 1 à 4, caractérisé en ce que l'élément métallique est une charnière qui supporte le vitrage.

11. Vitrage selon l'une ou plusieurs des revendications 1 à 10, caractérisé en ce qu'une plaquette métallique (22) mince couvrant les trous est placée sur la surface du vitrage opposée à l'élément métallique placé sur l'autre surface du vitrage.

12. Vitrage selon l'une ou plusieurs des revendications 1 à 11, caractérisé en ce que les trous (32) possèdent une dépouille, c'est-à-dire ont une largeur croissante lorsqu'on s'éloigne du support métallique.

## Patentansprüche

1. Glasscheibe mit einem mittels einer viskosen härtenden Klebemasse mit der Glasscheibe verbundenen metallischen Element, **dadurch gekennzeichnet**, daß die Galsscheibe (1; 11; 18; 31) in dem von der Klebemasse (4) bedeckten Bereich mit wenigstens einem die Glasscheibe durchdringenden, eine zusätzliche mechanische Verankerung der ausgehärteten Klebemasse (4) in der Glasscheibe bewirkenden Loch (6; 15; 21; 32) versehen ist.

2. Glasscheibe nach Anspruch 1, dadurch gekennzeichnet, daß der Durchmesser oder die Breite der Löcher (6; 15; 21; 32) kleiner ist als die Dicke der Glasscheibe (1; 11; 18; 31).

3. Glasscheibe nach Anspruch 2, dadurch gekennzeichnet, daß der Durchmesser oder die Breite der Löcher (6; 15; 21; 32) 1 bis 5 mm beträgt.

4. Glasscheibe nach einem der Ansprüche 1 bis 3, dadurch gekennzeichnet, daß als Kleber ein feuchtigkeitshärtender Einkomponenten-Polyurethankleber verwendet wird.

5. Glasscheibe nach einem oder mehreren der Ansprüche 1 bis 4, dadurch gekennzeichnet, daß das metallische Element eine entlang der Scheibenkante mit der Glasscheibe (1) verklebte Führungsschiene (2; 8) ist.

6. Glasscheibe nach einem oder mehreren der Ansprüche 1 bis 4, dadurch gekennzeichnet, daß das metallische Element ein die Glasscheibe (11) am Rand einfassende, im Querschnitt U-foermiges Profil (12) ist.

7. Glasscheibe nach einem oder mehreren der Ansprüche 1 bis 4, dadurch gekennzeichnet, daß das metallische Element ein mit der InnenoberflÄche einer verschiebbaren Seitenscheibe (18) verklebter Führungsbolzen (19) ist.

8. Glasscheibe nach einem oder mehreren der Ansprüche 1 bis 4, dadurch gekennzeichnet, dass das metallische Element das Halteelement (25) für einen Rückblickspiegel ist.

9. Glasscheibe nach einem oder mehreren der Ansprüche 1 bis 4, dadurch gekennzeichnet, daß das metallische Element ein Halteelement für Signalleuchten, insbesondere für Bremsleuchten, ist.

10. Glasscheibe nach einem der Ansprüche 1 bis 4, dadurch gekennzeichnet, daß das metallische Halteelement ein die Glasscheibe tragendes Scharnier ist.

11. Glasscheibe nach einem oder mehreren der Ansprüche 1 bis 10, dadurch gekennzeichnet, daß auf der dem mit einer Oberfläche der Glasscheibe verbundenen metallischen Element gegenüberliegenden Glasoberfläche ein die Löcher verdeckendes dünnes Metallplättchen (22) angeordnet ist.

12. Glasscheibe nach einem oder mehreren der Ansprüche 1 bis 11, dadurch gekennzeichnet, daß die Löcher (32) in der Glasscheibe hinterschnitten sind, das heißt mit zunehmender Entfernung vom metallischen Halteelement sich konisch erweitern.

## Claims

1. Glazing pane comprising a metal element associated with the pane by a hardening viscous adhesive, characterized in that the pane (1; 11; 18; 30) is equipped, in the zone covered by the adhesive (4), with at least one hole (6; 15; 21; 32) passing through the pane, which provides a supplementary mechanical anchorage in the pane of the hardened adhesive (4).

2. Pane according to Claim 1, characterized in that the diameters or widths of the holes (6; 15; 21; 32) are smaller than the thickness of the pane (1; 11; 18; 30).

3. Pane according to Claim 2, characterized in that the diameters or widths of the holes (6; 15; 21; 32) lie between 1 and 5 mm.

4. Pane according to one of Claims 1 to 3, characterized in that a moisture-hardening, single-component polyurethane is used as adhesive.

5. Pane according to one or more of Claims 1 to 4, characterized in that the metal element is a guiding profile (2; 8) glued along the edge of the pane (1) to its surface.

6. Pane according to one or more of Claims 1 to 4, characterized in that the metal element is constituted of a profiled member (12) of U-section, which mounts the pane (11) at the edge.

7. Pane according to one or more of Claims 1 to 4, characterized in that the metal element is a guide knob (19), glued to the internal surface of a sliding side window pane (18).

8. Pane according to one or more of Claims 1 to 4, characterized in that the metal element is a support piece (25) for a rearview mirror.

9. Pane according to one or more of Claims 1 to 4, characterized in that the metal element is the support for light signals, especially for stop lamps.

10. Pane according to one or more of Claims 1 to 4, characterized in that the metal element is a hinge which supports the pane.

11. Pane according to one or more of Claims 1 to 10, characterized in that a thin metal plate (22), covering the holes, is placed on the surface of the pane opposite to the metal element placed on the other surface of the pane.

12. Pane according to one or more of Claims 1 to 11, characterized in that the holes (32) have a rake, that is to say they have a width that increases with distance from the metal support.
